# EUROPÄISCHE PATENTSCHRIFT

(11) **EP 3 284 651 B1**
(45) Veröffentlichungstag und Bekanntmachung des Hinweises auf die Patenterteilung: **28.10.2020**
(21) Anmeldenummer: 17184011.9
(22) Anmeldetag: 31.07.2017
(51) Int. Cl.: B62D 15/02, B60W 30/06

(54) **VERFAHREN ZUM FERNGESTEUERTEN MANÖVRIEREN EINES KRAFTFAHRZEUGS MIT ERFASSUNG DES KRAFTFAHRZEUGS, MOBILES ENDGERÄT, KRAFTFAHRZEUG SOWIE SYSTEM**
METHOD FOR REMOTE CONTROLLED MANOEUVRING OF A MOTOR VEHICLE WITH DETECTION OF THE MOTOR VEHICLE, MOBILE TERMINAL, MOTOR VEHICLE, AND SYSTEM
PROCÉDÉ DE MANOEUVRE TÉLÉCOMMANDÉE D'UN VÉHICULE AUTOMOBILE PAR DÉTECTION DU VÉHICULE, TERMINAL MOBILE, VÉHICULE ET SYSTÈME

(30) Priorität: 15.08.2016 DE 102016115083
(43) Veröffentlichungstag der Anmeldung: 21.02.2018
(73) Patentinhaber: Valeo Schalter und Sensoren GmbH, 74321 Bietigheim-Bissingen (DE)
(72) Erfinder: Rostocki, Paul-David, 74321 Bietigheim-Bissingen (DE); Gotzig, Heinrich, 74321 Bietigheim-Bissingen (DE)
(74) Vertreter: Pothmann, Karsten

(56) Entgegenhaltungen:
- WO-A1-2017/097942
- DE-A1-102013 010 819
- DE-A1-102014 007 915
- GB-A- 2 534 471
- JP-A- 2014 065 392
- US-A1- 2016 224 025

## Beschreibung

Die vorliegende Erfindung betrifft ein Verfahren zum ferngesteuerten Manövrieren eines Kraftfahrzeugs, bei welchem mittels eines kraftfahrzeugexternen, mobilen Endgeräts ein Steuersignal an ein Steuergerät des Kraftfahrzeugs übertragen wird und das Kraftfahrzeug mittels des Steuergeräts in Abhängigkeit von dem Steuersignal in einen autonomen Fahrmodus überführt wird, in welchem das Kraftfahrzeug autonom manövriert wird. Ferner wird das Kraftfahrzeug mittels einer Erfassungseinrichtung des mobilen Endgeräts während des Manövrierens erfasst. Darüber hinaus betrifft die vorliegende Erfindung ein mobiles Endgerät. Des Weiteren betrifft die vorliegende Erfindung ein Kraftfahrzeug. Schließlich betrifft die vorliegende Erfindung ein System, welches ein mobiles Endgerät und ein Kraftfahrzeug umfasst.

Das Interesse richtet sich vorliegend auf Verfahren, zum ferngesteuerten Manövrieren eines Kraftfahrzeugs. Hierzu ist es aus dem Stand der Technik bekannt, dass Kraftfahrzeuge mit einer entsprechenden Fernsteuerung beziehungsweise mit einem mobilen Endgerät während eines autonomen Parkmanövers ferngesteuert werden. Hierzu kann mit dem mobilen Endgerät ein Steuersignal an das Kraftfahrzeug übertragen werden, infolge dessen das Kraftfahrzeug in den autonomen Fahrmodus überführt wird. In dem autonomen Fahrmodus kann von einem Fahrerassistenzsystem des Kraftfahrzeugs die Umgebung mit Sensoren erfasst werden und eine Trajektorie zum Ausparken aus einer Parklücke oder eine Trajektorie zum Einparken in eine Parklücke bestimmt werden. In dem autonomen Fahrmodus kann dann das Kraftfahrzeug entlang der bestimmten Trajektorie manövriert werden.

Wenn das Kraftfahrzeug autonom manövriert wird, während sich der Fahrer außerhalb des Kraftfahrzeugs befindet, können Sicherheitsrisiken entstehen. Um die Sicherheit bei einem autonomen Manövrieren beziehungsweise Rangieren des Kraftfahrzeugs, bei dem sich der Fahrer während des Rangiervorgangs außerhalb des Kraftfahrzeugs befindet, zu erhöhen, schlägt die DE 10 2011 114 317 A1 ein Verfahren zum autonomen Rangieren eines Fahrzeugs vor. Dabei wird der Fahrer mittels einer Detektionseinrichtung des Fahrzeugs während des Rangiervorgangs erfasst. Der Rangiervorgang wird zumindest unterbrochen, wenn der Fahrer sich zumindest außerhalb des Bildbereichs eines von der Detektionseinrichtung aufgenommenen Bilds befindet.

Darüber hinaus sind aus dem Stand der Technik Verfahren bekannt, bei denen das Kraftfahrzeug während des autonomen Manövrierens mit Hilfe des mobilen Endgeräts, mit dem auch die Fernsteuerung durchgeführt wird, erfasst wird. Hierzu beschreibt die EP 2 316 709 A2 ein Kraftfahrzeug mit einer zugeordneten externen Steuerungsvorrichtung und einem Park-Lenk-Assistenzsystem. Dabei ist die externe Steuerungsvorrichtung zur Kommunikation mit einer kraftfahrzeugseitigen Steuerungseinrichtung ausgebildet. Die kraftfahrzeugseitige Steuerungseinrichtung kann unter Berücksichtigung der im Rahmen der Kommunikation übertragenen Signale eine Ortsinformation über den Aufenthaltsort des Fahrers und/oder einen vom Fahrer vorgegebenen Zielort ermitteln. Dabei kann es auch vorgesehen sein, dass die externe Steuerungsvorrichtung einen bildgebenden Sensor aufweist und das Kraftfahrzeug wenigstens zwei durch den bildgebenden Sensor erfassbare Marker aufweist. Dabei kann die externe Steuerungsvorrichtung zur Auswertung der Bilddaten des bildgebenden Sensors und zur Ermittlung der Ortsinformation unter Berücksichtigung des Auswerteergebnisses ausgebildet sein.

Die DE 10 2014 007 915 A1, die den Oberbegriff der Ansprüche 1, 10 und 11 offenbart, zeigt ein Verfahren zur Fernsteuerung einer Funktion eines Fahrzeuges mittels einer mobilen Einheit, welche eine Erfassungseinheit umfasst, die auf wenigstens einem Bereich des Fahrzeuges gerichtet ist. Bei dem Verfahren ist eine eindeutige Identifikation des durch die Fernsteuerung zu bedienenden Fahrzeuges möglich, wobei der Bereich eine fahrzeugidentifizierende Daten enthaltende Markierung aufweist, welche von der Erfassungseinheit aufgenommen wird. Die Fernsteuerung der Funktion des Fahrzeuges wird freigegeben, wenn die Auswertung der fahrzeugidentifizierenden Daten der Markierung eine erfolgreiche Erkennung des Fahrzeuges ergibt.

Die DE 10 2013 010 819 A1 zeigt ein Verfahren zur Fernsteuerung einer Funktion eines Fahrzeugs, wobei mittels einer in der mobilen Steuereinheit integrierten Signalemfangseinheit ein Signal des Fahrzeugs erfasst wird, wobei an einer vorgegebenen Position am Fahrzeug ein optisches oder ein akustisches Signal erzeugt wird. Die Fernsteuerung wird ausschließlich dann freigegeben, wenn das optische oder akustische Signal von der Signalempfangseinheit erfasst wird.

Die GB 2534471 A und die WO 2017/097942 A1 zeigen weitere Verfahren zur Fernsteuerung einer Funktion eines Fahrzeugs.

Wenn das Kraftfahrzeug autonom manövriert wird und sich der Fahrer mit dem mobilen Endgerät außerhalb des Kraftfahrzeugs befindet, können auch Situationen entstehen, dass sich das Kraftfahrzeug außerhalb des Sichtbereichs des Fahrers befindet. Eine derartige Situation ist ungewollt, da der Fahrer die Umgebung des Kraftfahrzeugs während des autonomen Manövrierens des Kraftfahrzeugs nicht einsehen kann. Dabei können Personen verletzt werden oder auch Sachschäden entstehen.

Es ist Aufgabe der vorliegenden Erfindung, eine Lösung aufzuzeigen, die ein Verfahren zum ferngesteuerten Manövrieren eines Kraftfahrzeugs sicherer durchgeführt werden kann.

Diese Aufgabe wird erfindungsgemäß durch ein Verfahren, durch ein mobiles Endgerät, durch ein Kraftfahrzeug sowie durch ein System mit den Merkmalen gemäß den jeweiligen unabhängigen Ansprüchen gelöst. Vorteilhafte Weiterbildungen in der vorliegenden Erfindung sind Gegenstand der abhängigen Ansprüche.

Bei einer Ausführungsform eines Verfahrens zum ferngesteuerten Manövrieren eines Kraftfahrzeugs wird bevorzugt mittels eines kraftfahrzeugexternen, mobilen Endgeräts ein Steuersignal an ein Steuergerät des Kraftfahrzeugs übertragen. Ferner wird das Kraftfahrzeug mittels des Steuergeräts bevorzugt in Abhängigkeit von dem Steuersignal in einen autonomen Fahrmodus überführt, in welchen das Kraftfahrzeug insbesondere autonom manövriert wird. Darüber hinaus wird das Kraftfahrzeug bevorzugt mittels einer Erfassungseinrichtung des mobilen Endgeräts während des Manövrierens erfasst. Dabei ist es insbesondere vorgesehen, dass das Kraftfahrzeug nur in dem autonomen Fahrmodus betrieben wird, solange das Kraftfahrzeug mittels der Erfassungseinrichtung des mobilen Endgeräts erfasst wird.

Ein erfindungsgemäßes Verfahren dient zum ferngesteuerten Manövrieren eines Kraftfahrzeugs. Hierbei wird mittels eines kraftfahrzeugexternen, mobilen Endgeräts ein Steuersignal an ein Steuergerät des Kraftfahrzeugs übertragen. Ferner wird das Kraftfahrzeug mittels des Steuergeräts in Abhängigkeit von dem Steuersignal in einen autonomen Fahrmodus überführt, in welchem das Kraftfahrzeug autonom manövriert wird. Ferner wird das Kraftfahrzeug mittels einer Erfassungseinrichtung des mobilen Endgeräts während des Manövrierens erfasst. Dabei wird das Kraftfahrzeug nur in dem autonomen Fahrmodus betrieben, solange das Kraftfahrzeug mittels der Erfassungseinrichtung des mobilen Endgeräts erfasst wird.

Mit Hilfe des Verfahrens soll ein Kraftfahrzeug autonom manövriert werden, während sich der Fahrer beziehungsweise der Bediener außerhalb des Kraftfahrzeugs befindet. Beispielsweise kann das Kraftfahrzeug autonom in eine Parklücke eingeparkt werden oder das Kraftfahrzeug kann autonom aus einer Parklücke ausgeparkt werden. Während des autonomen Manövrierens des Kraftfahrzeugs betätigt der Fahrer das mobile Endgerät, das sich außerhalb des Kraftfahrzeugs befindet. Beispielsweise kann der Fahrer das mobile Endgerät in seiner Hand halten. Bei dem mobilen Endgerät kann es sich beispielsweise um ein Mobiltelefon, ein Smartphone, einen tragbaren Computer, einen Fahrzeugschlüssel, eine Datenbrille oder dergleichen handeln. Mit Hilfe des mobilen Endgeräts kann ein Steuersignal an ein elektronisches Steuergerät des Kraftfahrzeugs übertragen werden. Das Steuersignal kann insbesondere kabellos bzw. drahtlos von dem mobilen Endgerät zu dem Steuergerät übertragen werden. Das Steuergerät und das mobile Endgerät können beispielsweise über die Funkverbindung Daten übertragen. Die Funkverbindung kann beispielsweise nach Art einer Kurzstrecken-Funktechnik ausgebildet sein. Beispielsweise kann eine Bluetooth-Verbindung und/oder eine WLAN-Verbindung zwischen dem mobilen Endgerät und dem Steuergerät aufgebaut werden. Es kann auch vorgesehen sein, dass Daten zwischen dem mobilen Endgerät und dem Steuergerät über Mobilfunk ausgetauscht werden.

Infolge des Empfangens des Steuersignals kann das Steuergerät das Kraftfahrzeug in den autonomen Fahrmodus überführen. Insbesondere kann mit Hilfe des Steuergeräts ein Fahrerassistenzsystem aktiviert werden, welches das Kraftfahrzeug autonom manövriert. Während des autonomen Manövrierens kann das Fahrerassistenzsystem mit Hilfe von entsprechenden Sensoren die Umgebung des Kraftfahrzeugs erfassen. Mit dem Fahrerassistenzsystem kann ferner eine Trajektorie bestimmt werden, entlang welcher das Kraftfahrzeug dann autonom manövriert wird. Während des Manövrierens kann das Fahrerassistenzsystem in die Lenkung, eine Bremsanlage und/oder den Antriebsmotor des Kraftfahrzeugs eingreifen.

Gemäß einem wesentlichen Aspekt der vorliegenden Erfindung ist es vorgesehen, dass das Kraftfahrzeug nur in dem autonomen Fahrmodus betrieben wird, solange das Kraftfahrzeug mittels der Erfassungseinrichtung des mobilen Endgeräts erfasst wird. Mit Hilfe der Erfassungseinrichtung des mobilen Endgeräts kann also das Kraftfahrzeug erkannt werden. Dabei kann es weiterhin vorgesehen sein, dass der Fahrer beziehungsweise der Bediener das mobile Endgerät während des autonomen Manövrierens des Kraftfahrzeugs fortlaufend bedient beziehungsweise betätigt. Es ist also insbesondere vorgesehen, dass der Fahrer das mobile Endgerät während des autonomen Manövrierens des Kraftfahrzeugs in seiner Hand hält. Bevorzugt kann der Fahrer das mobile Endgerät so ausrichten, dass das Kraftfahrzeug mit der Erfassungseinrichtung des mobilen Endgeräts erkannt beziehungsweise erfasst werden kann. Wenn das Kraftfahrzeug mit der Erfassungseinrichtung erfasst werden kann, kann auch davon ausgegangen werden, dass sich das Kraftfahrzeug in dem Sichtbereich des Fahrers befindet. Nur wenn dies der Fall ist, wird das Kraftfahrzeug auch autonom manövriert. Falls das Kraftfahrzeug nicht mehr von der Erfassungseinrichtung erfasst werden kann, ist es insbesondere vorgesehen, dass der autonome Fahrmodus beendet beziehungsweise abgebrochen wird. Somit kann sichergestellt werden, dass das Kraftfahrzeug nur dann autonom manövriert wird, wenn sich das Kraftfahrzeug auch im Sichtbereich des Fahrers befindet. Somit können beispielsweise Situationen unterbunden werden, bei denen der Fahrer das Kraftfahrzeug fernsteuert, auch wenn dieses außerhalb des Sichtbereichs des Fahrers ist. Es können somit auch Situationen vermieden werden, bei denen beispielsweise Kinder, die sich in einer Wohnung befinden, das Kraftfahrzeug ungewollt fernsteuern. Somit kann die Verletzung von Personen und Sachschäden vermieden werden.

Bevorzugt wird mittels des mobilen Endgeräts das Steuersignal fortlaufend an das Steuergerät übertragen, solange das Kraftfahrzeug mittels der Erfassungseinrichtung erfasst wird, und das Kraftfahrzeug wird nur in dem autonomen Fahrmodus betrieben, solange das Steuersignal mit dem Steuergerät empfangen wird. Wenn das Kraftfahrzeug mit der Erfassungseinrichtung erfasst wird, kann fortlaufend ein Steuersignal an das Steuergerät des Kraftfahrzeugs übertragen werden. Das Steuergerät kann dann den autonomen Fahrmodus des Kraftfahrzeugs solange aufrechterhalte, solange auch das Steuersignal empfangen wird. Falls das Steuersignal nicht mehr empfangen wird, kann auch der autonome Fahrmodus beendet werden. Somit kann auf sichere Weise ermöglicht werden, dass das Kraftfahrzeug nur dann autonom manövriert wird, sofern es sich im Sichtbereich des Fahrers befindet.

Weiterhin ist es vorteilhaft, wenn mittels des mobilen Endgeräts ein Abbruchsignal an das Steuergerät übertragen wird, falls das Erfassen des Kraftfahrzeugs mittels der Erfassungseinrichtung unterbleibt, und der autonome Fahrmodus beendet wird, falls das Abbruchsignal empfangen wird. Alternativ oder zusätzlich kann es vorgesehen sein, dass das mobile Endgerät ein spezielles Abbruchsignal an das Steuergerät des Kraftfahrzeugs übermittelt, falls es mit seiner Erfassungseinrichtung das Kraftfahrzeug nicht mehr erkennt. Somit kann die Sicherheit beim ferngesteuerten Manövrieren des Kraftfahrzeugs erhöht werden.

Es werden zum Erfassen des Kraftfahrzeugs eine Form und/oder eine Farbe des Kraftfahrzeugs mittels eines optischen Sensors der Erfassungseinrichtung erkannt. Die Erfassungseinrichtung kann einen optischen Sensor aufweisen, welcher die Umgebung des mobilen Endgeräts optisch erfassen kann. Zudem kann die Erfassungseinrichtung eine entsprechende Auswerteeinheit aufweisen, mittels welcher die mit dem optischen Sensor bereitgestellten Sensordaten ausgewertet werden können. Informationen, welche das Kraftfahrzeug optisch beschreiben, können in dieser Auswerteeinheit hinterlegt sein. Somit wird das Kraftfahrzeug anhand seiner Farbe, der Formgebung der Karosserie oder Teilen davon oder dergleichen erkannt. Dies ermöglicht eine einfache und zuverlässige Erkennung des Kraftfahrzeugs.

Bevorzugt umfasst die Erfassungseinrichtung als den optischen Sensor eine Kamera. Mittels der Kamera wird ein Bild aufgenommen und mittels einer Auswerteeinheit der Erfassungseinrichtung wird zum Erfassen des Kraftfahrzeugs überprüft, ob das Bild zumindest einen Teil des Kraftfahrzeugs zeigt. Mit anderen Worten kann die Erfassungseinrichtung beziehungsweise das mobile Endgerät eine Kamera aufweisen, mittels welcher ein Bild oder eine Bildfolge bereitgestellt werden kann. Die Auswerteeinheit der Erfassungseinrichtung kann dann mit Hilfe eines entsprechenden Bildverarbeitungsalgorithmus oder Objekterkennungsalgorithmus überprüfen, ob sich zumindest Teile des Kraftfahrzeugs in dem Bild befinden. Dies erweist sich insbesondere als vorteilhaft, wenn das mobile Endgerät ein Smartphone ist, welches üblicherweise mit einer Kamera ausgestattet ist. Auf einem solchen Smartphone kann eine entsprechende Applikation verwendet werden, mittels welcher das Kraftfahrzeug oder Teile davon in den Bildern erkannt werden können. Dies ermöglicht es dem Fahrer sein Smartphone zum ferngesteuerten Manövrieren des Kraftfahrzeugs zu verwenden.

Gemäß einer weiteren Ausführungsform ist an dem Kraftfahrzeug ein Identifikationselement angeordnet und das Identifikationselement wird zum Erfassen des Kraftfahrzeugs mittels des optischen Sensors erkannt. Bei dem Identifikationselement kann es sich um ein Element handeln, welches an einer Außenfläche des Kraftfahrzeugs aufgebracht ist. Beispielsweise kann es sich bei dem Identifikationselement um eine entsprechende Lackierung des Kraftfahrzeugs durch ein zusätzliches Element, welches auf den Lack aufgebracht wird, handeln. Das Identifikationselement kann alternativ dazu auf einer Fahrzeugscheibe angeordnet werden. Beispielsweise kann es sich bei dem Identifikationselement um einen Aufkleber handeln. Weiterhin kann es vorgesehen sein, dass als das Identifikationselement das Nummernschild des Kraftfahrzeugs verwendet wird. Dieses Identifikationselement kann mit Hilfe des optischen Sensors und einer entsprechenden Auswerteeinheit erkannt werden. Dies ermöglicht eine eindeutige Identifikation des Kraftfahrzeugs.

Gemäß einer weiteren Ausführungsform wird das Identifikationselement anhand einer von dem Identifikationselement reflektierten und/oder abgestrahlten Strahlung außerhalb des sichtbaren Wellenlängenbereichs erkannt. Beispielsweise kann das Identifikationselement so ausgebildet sein, dass dieses im optischen Wellenlängenbereich nicht wahrnehmbar ist. Beispielsweise kann das Identifikationselement im infraroten Wellenlängenbereich Strahlung reflektieren oder abstrahlen. Somit kann das Identifikationselement von einem Menschen nicht wahrgenommen werden. Somit wird die Optik des Kraftfahrzeugs durch das Identifikationselement nicht negativ beeinflusst. Dabei kann der optische Sensor dazu ausgebildet sein, die Strahlung im infraroten Wellenlängenbereich zu erfassen.

Gemäß einer weiteren Ausgestaltung wird mittels des Kraftfahrzeugs ein vorbestimmtes optisches Signal ausgesendet und das optische Signal wird mittels des optischen Sensors zum Erfassen des Kraftfahrzeugs empfangen. Beispielsweise kann das Kraftfahrzeug einen entsprechenden Sensor umfassen, mit dem ein optisches Signal ausgesendet werden kann. Das optische Signal kann beispielsweise durch nicht im sichtbaren Wellenlängenbereich bereitgestellt werden. Bei dem optischen Signal kann es sich auch um Strahlung außerhalb des sichtbaren Wellenlängenbereichs handeln. Beispielsweise kann das optische Signal während des autonomen Manövrierens des Kraftfahrzeugs ausgesendet werden und mit der Erfassungseinrichtung des mobilen Endgeräts erfasst werden. Dies ermöglicht eine einfache und zuverlässige Erfassung des Kraftfahrzeugs.

Es ist insbesondere vorgesehen, dass das vorbestimmte optische Signal mittels eines Leuchtmittels einer Kraftfahrzeugaußenbeleuchtung ausgesendet wird. In modernen Kraftfahrzeugen werden in Scheinwerfern oder Heckleuchten vermehrt Leuchtdioden verwendet, welche mittels Pulsweitenmodulation betrieben werden. Mit Hilfe dieser Leuchtmittel, die mit Pulsweitenmodulation betrieben werden, kann ein entsprechend codiertes optisches Signal ausgesendet werden. Dabei kann das optische Signal derart codiert werden, dass dieses Signal für einen Menschen nicht sichtbar ist. Dies ermöglicht eine einfache Generierung des optischen Signals mit am Kraftfahrzeug üblicherweise verbauter Leuchtmittel.

Gemäß einer weiteren Ausgestaltung wird mittels des Kraftfahrzeugs ein vorbestimmtes akustisches Signal ausgesendet und das akustische Signal wird mittels der Erfassungseinrichtung zum Erfassen des Kraftfahrzeugs empfangen. Während des autonomen Manövrierens kann mit dem Kraftfahrzeug ein akustisches Signal ausgesendet werden. Zu diesem Zweck kann das Kraftfahrzeug beispielsweise einen entsprechenden Tongeber oder Lautsprecher aufweisen. Das akustische Signal kann auch von einer Hupe des Kraftfahrzeugs ausgesendet werden. Dieses akustische Signal kann beispielsweise mit Hilfe eines Mikrofons der Erfassungseinrichtung erkannt werden. Dabei kann es auch vorgesehen sein, dass ein Schallpegel des erfassten akustischen Signals bestimmt wird, um zu überprüfen, ob sich das Kraftfahrzeug in dem Sichtbereich des Fahrers, der das mobile Endgerät hält, befindet. Es kann auch vorgesehen sein, dass als das akustische Signal mit dem Kraftfahrzeug ein Ultraschallsignal mit einem Ultraschallsensor des Kraftfahrzeugs ausgesendet wird. In diesem Fall ist es erforderlich, dass die Erfassungseinrichtung dazu ausgelegt ist, dieses Ultraschallsignal zu erfassen.

Ein erfindungsgemäßes mobiles Gerät umfasst eine Sendeeinrichtung zum Übertragen eines Steuersignals zu einem Steuergerät eines Kraftfahrzeugs und eine

Erfassungseinrichtung zum Erkennen des Kraftfahrzeugs. Dabei ist die Sendeeinrichtung dazu ausgelegt, das Steuersignal in Abhängigkeit von dem Erkennen des Kraftfahrzeugs auszusenden. Der optische Sensor ist dazu eingerichtet, eine Form und/oder Farbe des Kraftfahrzeugs zum Erfassen des Kraftfahrzeugs zu erkennen.

Ein erfindungsgemäßes Kraftfahrzeug umfasst ein Steuergerät, mittels welchem das Kraftfahrzeug in Abhängigkeit von einem Steuersignal in einen autonomen Fahrmodus überführbar ist, in welchem das Kraftfahrzeug autonom manövriert wird, wobei das Steuergerät dazu ausgelegt ist, das Steuersignal von einem erfindungsgemäßen mobilen Endgerät zu empfangen. Das Kraftfahrzeug ist insbesondere als Personenkraftwagen ausgebildet.

Ein erfindungsgemäßes System umfasst ein erfindungsgemäßes mobiles Endgerät sowie ein erfindungsgemäßes Kraftfahrzeug. Das System ist dazu ausgelegt, ein erfindungsgemäßes Verfahren durchzuführen.

Die mit Bezug auf das erfindungsgemäße Verfahren vorgestellten bevorzugten Ausführungsformen und deren Vorteile gelten entsprechend für das erfindungsgemäße mobile Endgerät, das erfindungsgemäße Kraftfahrzeug sowie das erfindungsgemäße System.

Die Erfindung wird nun anhand von bevorzugten Ausführungsbeispielen sowie unter Bezugnahme auf die beigefügten Zeichnungen näher erläutert.

Dabei zeigen:
- Fig. 1: ein System, welches ein Kraftfahrzeug und ein mobiles Endgerät umfasst; und
- Fig. 2: das mobile Endgerät in einer schematischen Darstellung.

In den Figuren werden gleiche und funktionsgleiche Elemente mit den gleichen Bezugszeichen versehen.

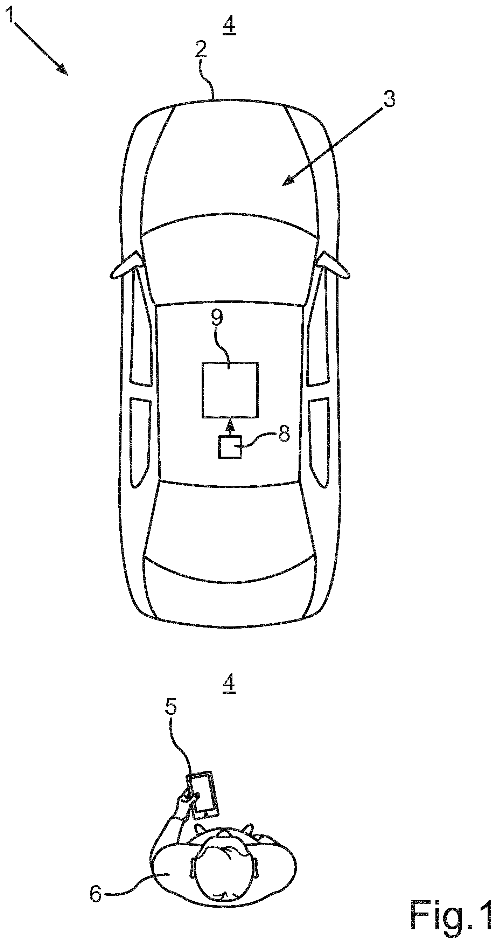

Fig. 1 zeigt ein System 1 gemäß einer Ausführungsform der vorliegenden Erfindung. Das System 1 umfasst ein Kraftfahrzeug 2, welches vorliegend in einer Draufsicht gezeigt ist. Das Kraftfahrzeug 2 ist vorliegend als Personenkraftwagen ausgebildet. Das Kraftfahrzeug 2 umfasst ferner ein Fahrerassistenzsystem 3, mit dem das Kraftfahrzeug 2 autonom manövriert werden kann. Zu diesem Zweck kann das Fahrerassistenzsystem 3 in eine Lenkung, ein Bremssystem und/oder einen Antriebsmotor des Kraftfahrzeugs 2 eingreifen. Ferner kann das Fahrerassistenzsystem 3 entsprechende Sensoren umfassen, mit denen eine Umgebung 4 des Kraftfahrzeugs 2 erfasst werden kann. Auf Grundlage der Informationen der Sensoren kann beispielsweise eine Trajektorie bestimmt werden, entlang welcher das Kraftfahrzeug 2 autonom manövriert wird. Mit Hilfe des Fahrerassistenzsystems 3 kann das Kraftfahrzeug 2 beispielsweise autonom in eine Parklücke eingeparkt werden oder autonom aus einer Parklücke ausgeparkt werden.

Darüber hinaus umfasst das System 2 ein mobiles Endgerät 5, welches vorliegend als Smartphone ausgebildet ist. Mit Hilfe des mobilen Endgeräts 5 kann ein ferngesteuertes Manövrieren des Kraftfahrzeugs 2 ermöglicht werden. Das mobile Endgerät 5 kann von einem Fahrer 6 des Kraftfahrzeugs 2 bedient werden. Der Fahrer 6 und das mobile Endgerät 5 befinden sich vorliegend in der Umgebung 4 des Kraftfahrzeugs 2 und somit außerhalb des Kraftfahrzeugs 2. Mit Hilfe einer Sendeeinrichtung 7 des mobilen Endgeräts 5 kann ein Steuersignal kabellos bzw. drahtlos an das Kraftfahrzeug 2 übertragen werden. Dieses Steuersignal kann mit einer Empfangseinrichtung 8 des Kraftfahrzeugs 2 empfangen werden und an ein elektronisches Steuergerät 9 des Kraftfahrzeugs 2 übertragen werden. Sobald das Steuergerät 9 das Steuersignal empfangen hat, kann es das Fahrerassistenzsystem 3 in den autonomen Fahrmodus überführen, in welchem das Kraftfahrzeug 2 autonom manövriert wird.

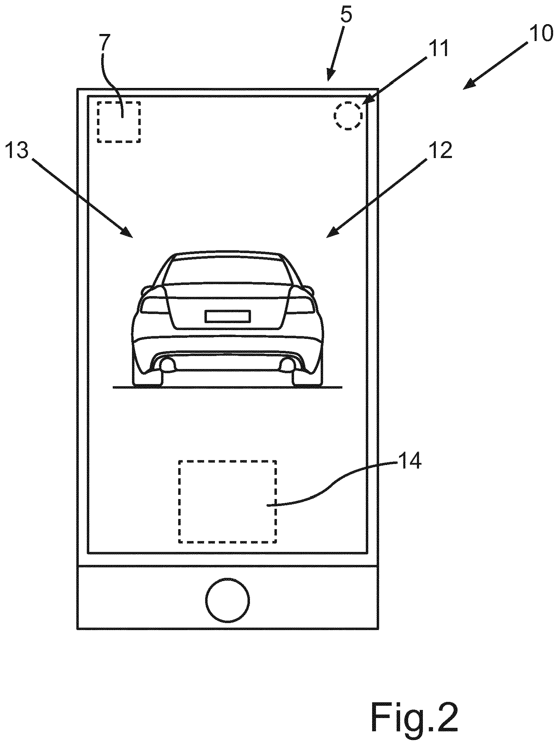

Fig. 2 zeigt eine schematische Darstellung des mobilen Endgeräts 5. Hierbei ist auch die Sendeeinrichtung 7 des mobilen Endgeräts 5 schematisch dargestellt. Das mobile Endgerät 5 umfasst eine Erfassungseinrichtung 10, mittels welcher das Kraftfahrzeug 2 erfasst werden kann. In dem vorliegenden Ausführungsbeispiel umfasst die Erfassungseinrichtung 10 einen optischen Sensor 11 in Form einer Kamera. Mit Hilfe des optischen Sensors 11 beziehungsweise mit Hilfe der Kamera kann ein Bild 12 des Kraftfahrzeugs 2 aufgenommen werden, welches vorliegend auf einer Anzeigeeinrichtung 13 des mobilen Endgeräts 5 angezeigt wird. Darüber hinaus umfasst das mobile Endgerät 5 beziehungsweise die Erfassungseinrichtung 10 eine Auswerteeinheit 14. Mit Hilfe der Auswerteeinheit 14 können die Bilder, die mit dem optischen Sensor 11 beziehungsweise der Kamera bereitgestellt werden, ausgewertet werden. Insbesondere kann das Kraftfahrzeug 2 in den Bildern 12 mit Hilfe der Auswerteeinheit 14 erkannt werden.

Dabei ist es vorgesehen, dass das Kraftfahrzeug 2 nur solange in dem autonomen Fahrmodus betrieben wird, solange auch das Kraftfahrzeug 2 mit Hilfe der Erfassungseinrichtung 10 des mobilen Endgeräts 5 erkannt werden kann. Auf diese Weise kann sichergestellt werden, dass sich das Kraftfahrzeug 2 in einem Sichtbereich des Fahrers 6 befindet. Beispielsweise kann das mobile Endgerät 5, solange es das Kraftfahrzeug 2 erfasst, das Steuersignal fortlaufend an das Steuergerät 9 des Kraftfahrzeugs 2 übermitteln. Falls das Empfangen des Steuersignals unterbleibt, kann das Steuergerät 9 den autonomen Fahrmodus beenden. Somit kann sichergestellt werden, dass der Fahrer 6 beziehungsweise der Bediener im Sichtbereich ist und visuellen Kontakt zu dem Kraftfahrzeug 2 hat.

Grundsätzlich kann es auch vorgesehen sein, dass das Kraftfahrzeug 2 mit Hilfe der Erfassungseinrichtung 10 anhand eines Identifikationselements erkannt wird, welches auf die Außenfläche des Kraftfahrzeugs 2 aufgebracht ist. Dabei kann das Identifikationselement beispielsweise so ausgebildet sein, dass dieses im sichtbaren Wellenlängenbereich nicht sichtbar ist. Ferner kann während des autonomen Manövrierens des Kraftfahrzeugs 2 ein vorbestimmtes optisches Signal ausgesendet werden. Dieses optische Signal kann beispielsweise mit Hilfe der Scheinwerfer und/oder Heckleuchten des Kraftfahrzeugs 2 ausgesendet werden. Dieses optische Signal kann dann mit der Erfassungseinrichtung 10 erfasst werden. Grundsätzlich kann es auch vorgesehen sein, dass von dem Kraftfahrzeug 2 ein akustisches Signal während des Manövrierens ausgesendet wird, welches dann zum Erkennen des Kraftfahrzeugs 2 mit der Erfassungseinrichtung 10 erkannt wird. In diesem Fall kann die Erfassungseinrichtung 10 beispielsweise ein Mikrofon umfassen.

## Patentansprüche

1. Verfahren zum ferngesteuerten Manövrieren eines Kraftfahrzeugs (2), bei welchem mittels eines kraftfahrzeugexternen, mobilen Endgeräts (5) ein Steuersignal an ein Steuergerät (9) des Kraftfahrzeugs (2) übertragen wird, das Kraftfahrzeug (2) mittels des Steuergeräts (9) in Abhängigkeit von dem Steuersignal in einen autonomen Fahrmodus überführt wird, in welchem das Kraftfahrzeug (2) autonom manövriert wird, und das Kraftfahrzeug (2) mittels einer Erfassungseinrichtung (10) des mobilen Endgeräts (5) während des Manövrierens erfasst wird,
wobei das Kraftfahrzeug (2) nur in dem autonomen Fahrmodus betrieben wird, solange das Kraftfahrzeug (2) mittels der Erfassungseinrichtung (10) des mobilen Endgeräts (5) erfasst wird,
**dadurch gekennzeichnet, dass**
zum Erfassen des Kraftfahrzeugs (2) eine Form und/oder eine Farbe des Kraftfahrzeugs (2) mittels eines optischen Sensors (11) der Erfassungseinrichtung (10) erkannt wird.

2. Verfahren nach Anspruch 1,
**dadurch gekennzeichnet, dass**
mittels des mobilen Endgeräts (5) das Steuersignal fortlaufend an das Steuergerät (9) übertragen wird, solange das Kraftfahrzeug (2) mittels der Erfassungseinrichtung (10) erfasst wird, und das Kraftfahrzeug (2) nur in dem autonomen Fahrmodus betrieben wird, solange das Steuersignal mit dem Steuergerät (9) empfangen wird.

3. Verfahren nach Anspruch 1 oder 2,
**dadurch gekennzeichnet, dass**
mittels des mobilen Endgeräts (5) ein Abbruchsignal an das Steuergerät (9) übertragen wird, falls das Erfassen des Kraftfahrzeugs (2) mittels der Erfassungseinrichtung (10) unterbleibt, und der autonomen Fahrmodus beendet wird, falls das Abbruchsignal empfangen wird.

4. Verfahren nach Anspruch 1,
**dadurch gekennzeichnet, dass**
die Erfassungseinrichtung (10) als den optischen Sensor (11) eine Kamera umfasst, mittels der Kamera ein Bild (12) aufgenommen wird und mittels einer Auswerteeinheit (14) der Erfassungseinrichtung (10) zum Erfassen des Kraftfahrzeugs (2) überprüft wird, ob das Bild (12) zumindest einen Teil des Kraftfahrzeugs (2) zeigt.

5. Verfahren nach Anspruch 1 oder 4,
**dadurch gekennzeichnet, dass**
an dem Kraftfahrzeug (2) ein Identifikationselement angeordnet ist und das Identifikationselement zum Erfassen des Kraftfahrzeugs (2) mittels des optischen Sensors erkannt wird.

6. Verfahren nach Anspruch 5,
**dadurch gekennzeichnet, dass**
das Identifikationselement anhand einer von dem Identifikationselement reflektierten und/oder abgestrahlten Strahlung außerhalb des sichtbaren Wellenlängenbereichs erkannt wird.

7. Verfahren nach einem der Ansprüche 1 bis 6,
**dadurch gekennzeichnet, dass**
mittels des Kraftfahrzeugs (2) ein vorbestimmtes optisches Signal ausgesendet wird und das optisches Signal mittels des optischen Sensors (11) zum Erfassen des Kraftfahrzeugs (2) empfangen wird.

8. Verfahren nach Anspruch 7,
**dadurch gekennzeichnet, dass**
das vorbestimmte optische Signal mittels eines Leuchtmittels einer Kraftfahrzeugaußenbeleuchtung ausgesendet wird.

9. Verfahren nach einem der vorhergehenden Ansprüche,
**dadurch gekennzeichnet, dass**
mittels des Kraftfahrzeugs (2) ein vorbestimmtes akustisches Signal ausgesendet wird und das akustische Signal mittels der Erfassungseinrichtung (10) zum Erfassen des Kraftfahrzeugs (2) empfangen wird.

10. Mobiles Endgerät (5) mit einer Sendeeinrichtung (7) zum Übertragen eines Steuersignals zu einem Steuergerät (9) eines Kraftfahrzeugs (2) zum Überführen des Kraftfahrzeugs (2) in einen autonomen Fahrmodus, in welchem das Kraftfahrzeug (2) autonom manövriert wird, und mit einer Erfassungseinrichtung (10) zum Erkennen des Kraftfahrzeugs (2) während des Manövrierens, die einen optischen Sensor (11) aufweist, wobei die Sendeeinrichtung (7) dazu ausgelegt ist, das Steuersignal in Abhängigkeit von dem Erkennen des Kraftfahrzeugs (2) auszusenden, **dadurch gekennzeichnet, dass** der optische Sensor (11) dazu eingerichtet ist, eine Form und/oder eine Farbe des Kraftfahrzeugs (2) zum Erfassen des Kraftahrzeugs (2) zu erkennen.

11. Kraftfahrzeug (2) mit einem Steuergerät (9), mittels welchem das Kraftfahrzeug (2) in Abhängigkeit von einem Steuersignal in einen autonomen Fahrmodus überführbar ist, in welchem das Kraftfahrzeug (2) autonom manövriert wird, wobei das Steuergerät (9) dazu ausgelegt ist, das Steuersignal von einem mobilen Endgerät (5) nach Anspruch 10 zu empfangen.

12. System (1) mit einem mobilen Endgerät (5) nach Anspruch 10 und mit einem Kraftfahrzeug (2) nach Anspruch 11, wobei das System dazu ausgelegt ist ein Verfahren nach einem der Ansprüche 1 bis 9 durchzuführen.

## Claims

1. Method for manoeuvring a motor vehicle (2) by remote control, in which a mobile terminal (5) external to the motor vehicle is used to transmit a control signal to a control unit (9) of the motor vehicle (2), the motor vehicle (2) is transferred by means of the control unit (9), on the basis of the control signal, to an autonomous driving mode in which the motor vehicle (2) is manoeuvred autonomously, and the motor vehicle (2) is captured by means of a capture device (10) of the mobile terminal (5) during manoeuvring, wherein the motor vehicle (2) is operated only in the autonomous driving mode while the motor vehicle (2) is captured by means of the capture device (10) of the mobile terminal (5),
**characterized in that**
the motor vehicle (2) is captured by detecting a shape and/or a colour of the motor vehicle (2) by means of an optical sensor (11) of the capture device (10).

2. Method according to Claim 1,
**characterized in that**
the mobile terminal (5) is used to transmit the control signal to the control unit (9) continually while the motor vehicle (2) is captured by means of the capture device (10), and the motor vehicle (2) is operated only in the autonomous driving mode while the control signal is received by the control unit (9).

3. Method according to Claim 1 or 2,
**characterized in that**
the mobile terminal (5) is used to transmit an abort signal to the control unit (9) if capture of the motor vehicle (2) by means of the capture device (10) ceases, and the autonomous driving mode is terminated if the abort signal is received.

4. Method according to Claim 1,
**characterized in that**
the capture device (10) comprises a camera as the optical sensor (11), the camera is used to record an image (12), and an evaluation unit (14) of the capture device (10), for the purpose of capturing the motor vehicle (2), is used to check whether the image (12) shows at least a part of the motor vehicle (2).

5. Method according to Claim 1 or 4,
**characterized in that**
arranged on the motor vehicle (2) there is an identification element and the identification element is detected by means of the optical sensor for the purpose of capturing the motor vehicle (2).

6. Method according to Claim 5,
**characterized in that**
the identification element is detected on the basis of radiation reflected and/or emitted by the identification element outside the visible wavelength range.

7. Method according to one of Claims 1 to 6,
**characterized in that**
the motor vehicle (2) is used to transmit a predetermined optical signal and the optical signal is received by means of the optical sensor (11) for the purpose of capturing the motor vehicle (2).

8. Method according to Claim 7,
**characterized in that**
the predetermined optical signal is transmitted by means of an illuminant of a motor vehicle exterior lighting.

9. Method according to one of the preceding claims,
**characterized in that**
the motor vehicle (2) is used to transmit a predetermined acoustic signal and the acoustic signal is received by means of the capture device (10) for the purpose of capturing the motor vehicle (2).

10. Mobile terminal (5) having a transmitting device (7) for transmitting a control signal to a control unit (9) of a motor vehicle (2) for the purpose of transferring the motor vehicle (2) to an autonomous driving mode in which the motor vehicle (2) is manoeuvred autonomously, and having a capture device (10) for detecting the motor vehicle (2) during manoeuvring, which capture device has an optical sensor (11), wherein the transmitting device (7) is designed to transmit the control signal on the basis of the detection of the motor vehicle (2), **characterized in that** the optical sensor (11) is configured to detect a shape and/or a colour of the motor vehicle (2) for the purpose of detecting the motor vehicle (2).

11. Motor vehicle (2) having a control unit (9) by means of which the motor vehicle (2) is transferable, on the basis of a control signal, to an autonomous driving mode in which the motor vehicle (2) is manoeuvred autonomously, wherein the control unit (9) is designed to receive the control signal from a mobile terminal (5) according to Claim 10.

12. System (1) having a mobile terminal (5) according to Claim 10 and having a motor vehicle (2) according to Claim 11, wherein the system is designed to perform a method according to one of Claims 1 to 9.

## Revendications

1. Procédé de manœuvre télécommandée d'un véhicule automobile (2), dans lequel un signal de commande est transmis à un appareil de commande (9) du véhicule automobile (2) au moyen d'un terminal mobile (5) externe au véhicule automobile, le véhicule automobile (2) est amené au moyen de l'appareil de commande (9) en fonction du signal de commande à passer à un mode de conduite autonome dans lequel le véhicule automobile (2) est manœuvré de manière autonome, et le véhicule automobile (2) est détecté pendant la manœuvre au moyen d'un dispositif de détection (10) du terminal mobile (5),
dans lequel le véhicule automobile (2) n'est exploité que dans le mode de conduite autonome tant que le véhicule automobile (2) est détecté au moyen du dispositif de détection (10) du terminal mobile (5),
**caractérisé en ce qu'**un capteur optique (11) du dispositif de détection (10) permet de détecter une forme et/ou une couleur du véhicule automobile (2) pour détecter le véhicule automobile (2).

2. Procédé selon la revendication 1, **caractérisé en ce que** le terminal mobile (5) permet de transmettre le signal de commande en continu à l'appareil de commande (9) tant que le véhicule automobile (2) est détecté au moyen du dispositif de détection (10), et le véhicule automobile (2) n'est actionné que dans le mode de conduite autonome tant que le signal de commande est reçu par l'appareil de commande (9).

3. Procédé selon la revendication 1 ou 2, **caractérisé en ce que** le terminal mobile (5) permet de transmettre un signal d'interruption à l'appareil de commande (9) si la détection du véhicule automobile (2) au moyen du dispositif de détection (10) n'a pas lieu, et le mode de conduite autonome est terminé si le signal d'interruption est reçu.

4. Procédé selon la revendication 1, **caractérisé en ce que** le dispositif de détection (10) comprend une caméra comme capteur optique (11), la caméra permet de capturer une image (12), et une unité d'évaluation (14) du dispositif de détection (10) permet de vérifier si l'image (12) montre au moins une partie du véhicule automobile (2) pour la détection du véhicule automobile (2) .

5. Procédé selon la revendication 1 ou 4, **caractérisé en ce qu'**un élément d'identification est disposé sur le véhicule automobile (2), et l'élément d'identification est reconnu au moyen du capteur optique pour la détection du véhicule automobile (2).

6. Procédé selon la revendication 5, **caractérisé en ce que** l'élément d'identification est reconnu à l'aide d'un rayonnement en dehors de la gamme des longueurs d'onde visibles, réfléchi et/ou irradié par l'élément d'identification.

7. Procédé selon l'une quelconque des revendications 1 à 6, **caractérisé en ce que** le véhicule automobile (2) permet d'émettre un signal optique prédéterminé et le signal optique est reçu au moyen du capteur optique (11) pour la détection du véhicule automobile (2).

8. Procédé selon la revendication 7, **caractérisé en ce que** le signal optique prédéterminé est émis au moyen d'une source de lumière d'un éclairage extérieur de véhicule automobile.

9. Procédé selon l'une quelconque des revendications précédentes, **caractérisé en ce que** le véhicule automobile (2) permet d'émettre un signal acoustique prédéterminé et le signal acoustique est reçu au moyen du dispositif de détection (10) pour la détection du véhicule automobile (2).

10. Terminal mobile (5) comprenant un dispositif d'émission (7) pour transmettre un signal de commande à un appareil de commande (9) d'un véhicule automobile (2) pour faire passer le véhicule automobile (2) à un mode de conduite autonome dans lequel le véhicule automobile (2) est manœuvré de manière autonome, et comprenant un dispositif de détection (10) pour reconnaître le véhicule automobile (2) pendant la manœuvre qui présente un capteur optique (11), le dispositif d'émission (7) étant conçu pour émettre le signal de commande en fonction de la reconnaissance du véhicule automobile (2), **caractérisé en ce que** le capteur optique (11) est aménagé pour reconnaître une forme et/ou une couleur du véhicule automobile (2) pour la détection du véhicule automobile (2).

11. Véhicule automobile (2) comprenant un appareil de commande (9) qui permet de faire passer le véhicule automobile (2) en fonction d'un signal de commande à un mode de conduite autonome dans lequel le véhicule automobile (2) est manœuvré de manière autonome, l'appareil de commande (9) étant conçu pour recevoir le signal de commande d'un terminal mobile (5) selon la revendication 10.

12. Système (1) comprenant un terminal mobile (5) selon la revendication 10 et comprenant un véhicule automobile (2) selon la revendication 11, le système étant conçu pour exécuter un procédé selon l'une quelconque des revendications 1 à 9.
